# EUROPEAN PATENT APPLICATION

(11) **EP 4 678 537 A1**
(43) Date of publication of application: **14.01.2026**
(21) Application number: 24382737.5
(22) Date of filing: 09.07.2024
(51) Int. Cl.: B64D 41/00, H01M 8/04225, H01M 8/04223, H01M 8/0432, H01M 8/0444, H01M 8/04694, H01M 8/2475, H01M 8/04746

(54) **INERTING SYSTEM AND INERTING METHOD FOR WARMING A FUEL-CELL BEFORE STARTING THE FUEL-CELL**

(71) Applicant: Airbus Operations S.L.U., 28906 Getafe, Madrid (ES)
(72) Inventor: MARCOS IZQUIERDO, Juan Luis, 28906 Getafe (ES)

(57) **Abstract**

The invention relates to an inerting system and an inerting method, comprising a casing (11) housing a hydrogen fuel cell, a source of inert gas (14), an inert gas circuit (33) with the casing forming part of the inert gas circuit, characterized in that it comprises a heat exchanger (16) to heat up the inert gas and circulate the inert gas through the casing before starting up the fuel cell so as to warm up the fuel cell in order to avoid formation of water ice in the fuel cell.

## Description

The invention relates to an inerting system and a method for inerting a hydrogen fuel-cell. More particularly the invention relates to an inerting system and an inerting method for a hydrogen fuel-cell adapted to avoid a cold start of the fuel-cell.

Climate change requires that new technologies be developed to diminish the carbon dioxide emissions of human activities. In this context, aviation is developing technologies to replace fossil fuel with other sources of energy. The use of hydrogen fuel-cell onboard an aircraft is considered a potential replacement to provide electrical power to the aircraft. However the extreme operating conditions of an aircraft require some adaptations for fuel-cells to work correctly. In particular, aircrafts are exposed to extremely low temperatures, be it for geographical reasons or because of their high cruise altitude. Low temperatures may represent a risk to fuel-cells because their main byproduct is water which may freeze and obstruct conducts.

On the other hand, hydrogen is a gas with a very high permeability which makes it difficult to contain it inside working interfaces or volumes. Safety requirements of aircrafts also mean that measures must be taken to avoid any explosive or flammable atmospheres on-board. Therefore, where such risk may appear, inerting systems are usually implemented to ensure that such atmospheres never occur. In such inerting systems, an inert gas may be used and circulated around elements of hydrogen-based systems. It is common to use nitrogen as inerting gas, the inert gas being then provided through nitrogen bottles or nitrogen generation system. These inerting systems allow to maintain the concentration of hydrogen and oxygen many times below the required safety policy limits.

The invention aims to provide an inerting system and an inerting method which allow to use fuel-cells on-board an aircraft in optimal conditions.

The invention aims to provide an inerting system and an inerting method which ensure safety of an aircraft with on-board hydrogen fuel-cells.

The invention also aims to provide an inerting system and an inerting method that minimize the amount of inerting gas used for inerting hydrogen systems.

To this end, the invention proposes an inerting system according to claim 1, and a method for inerting a hydrogen fuel cell according to claim 10. Dependent claims define various embodiments of the invention.

In the whole text, the term 'hydrogen' is used to designate molecular hydrogen or 'di-hydrogen'. Similarly, the term 'oxygen' is used to designate molecular oxygen or 'di-oxygen'.

An inerting system according to the invention comprises:
- a casing adapted to house at least one hydrogen fuel cell,
- a source of inert gas ,
- an inert gas circuit adapted to conduct inert gas, said inert gas circuit being connected to the casing such that the casing is part of the inert gas circuit,
and is characterized in that it comprises a heat exchanger adapted to heat up inert gas passing through said heat exchanger, the heat exchanger being located upstream the casing on the inert gas circuit.

The inert gas circuit is a hydraulic circuit adapted to circulate inert gas. The inert gas may for example be nitrogen.

In the whole text, the term "inert gas" is used even if mixed in small proportions with other gases. Indeed, the role of the inert gas is to suffocate and carry away any undesirable gas such as hydrogen and/or oxygen. As a consequence, the inert gas may be contaminated by these gases at some point in the circuit.

The inert gas circuit is supplied with inert gas by an inert gas source such as a pressurized nitrogen bottle for example.

The inerting system allows to inert a volume around a fuel cell in a controlled manner to prevent the occurrence of a fire or the creation of a flammable atmosphere in any portion of said volume.

A heat source of the invention may for example be a heat exchanger such as a liquid-gas heat exchanger or an electrically resistive heat source. More particularly, the heat source may use waste heat from another aircraft system.

The casing is adapted to house at least one fuel cell. A plurality of fuel cells may be stacked in the casing.

The casing is adapted to contain a potential leak of hydrogen for the fuel cell or other hydrogen systems such as pipes, valves, or else so that it does not extend outside the casing. The casing is also adapted to impede the ingress of air (in particular of oxygen) within its volume. The casing comprises at least one inlet for allowing inert gas to be fed to the casing and at least one outlet for exhausting gas from the casing.

The invention may be applied to other aircraft elements than fuel cells, in particular any portion of a H2 functioning system on-board an aircraft. For example the casing may be adapted to house one or more filters of a fuel cell system. In such filters, H2 may accumulate such that these filters need a housing casing to avoid that the H2 they contain leak to other areas of the aircraft. Also, as ice may form on these filters due to surrounding water-humidity, a pre-heating of such filters with a system and/or a method of the invention also provides benefits.

The invention also extends to a method for inerting a hydrogen fuel-cell comprising:
- circulating an inert gas in a casing containing the fuel-cell,
characterized in that it comprises a step of:
- heating up the inert gas before circulating the inert gas in the casing containing the fuel-cell.

In a method of the invention, a warm inert gas is circulated through the casing of the fuel-cell during a duration, called warm up duration, before the fuel-cell is started up.

The warm up duration may be predetermined, i.e. it may a fixed duration, for example a duration stored in a memory based on theoretical and/or practical determination.

Alternatively, the warm up duration may be determined based on sensors, external data and/or calculations. In such cases the warming of the inert gas may for example be stopped as soon as a given temperature is attained in the fuel cell. In other embodiments, the warm up duration may for example be based on the temperature of the fuel-cell before warming it up and/or may be based on an exterior temperature.

The invention ensures that, when starting the fuel-cell, no element of the fuel-cell is below zero degrees and that the water byproduct of the fuel-cell will thus not freeze in the fuel-cell.

Also, the invention allows to minimize leaks of oxygen and hydrogen. Indeed, at low temperatures, interfaces such as seals contract and as a consequence are more prone to leaks. The invention proposes to warm up the fuel-cell before starting it, such that leaks at joints are also reduced or avoided when hydrogen is injected in the fuel cell.

The invention therefore allows a safe and efficient start of a fuel-cell even in negative temperature conditions. This invention therefore allows to start up fuel cells in any condition, including at high altitude or on-ground in places with very low exterior temperature. In particular the invention allows to safely re-start a fuel-cell in an aircraft at any moment, including during a flight at high altitude.

The inert gas circuit further comprises an exhaust portion to exhaust inert gas to the atmosphere, said exhaust portion of the inert gas circuit being situated downstream the casing. The exhaust allows in particular to exhaust an inert gas that has been contaminated by an undesirable gas such as hydrogen in a percentage determined to be too high to maintain this inert gas in the inerting system.

The inert gas circuit connects an exhaust of the fuel cell casing to the exhaust of the inert gas circuit to the atmosphere. Thus, flammable gases such as hydrogen and oxygen that may be mixed with the inert gas because of leaks in the casing may safely be exhausted to the atmosphere outside the aircraft.

The fuel-cell casing comprises sensing means comprising at least one temperature sensor adapted to measure the temperature inside the fuel-cell casing.

As already mentioned, the warm up duration may be at least partially determined based on the temperature measured by a temperature sensor placed in the fuel cell casing. The temperature sensor may be a temperature sensor of the fuel cell itself given that fuel cells usually comprise one or more temperature sensors.

The inerting system comprises control means in data communication with the temperature sensor and adapted to control a power delivered by the heat exchanger to inert gas passing through the heat exchanger, based on the temperature data provided by the temperature sensor.

Control means of the inerting system then receive data from the fuel cell temperature sensor, either directly or through control means of the fuel cell. Control means of the fuel cell and of the inerting system may also be one and same control means.

The power of the heat exchanger and as a consequence the temperature of the inert gas circulating in the fuel cell casing may be adapted based on the temperature measured by this temperature sensor.

The control means may comprise, for example, a microcontroller. In some embodiments the control means are adapted to calculate a warm up duration.

The inert gas circuit comprises a recirculation loop between an exhaust of the casing and a three-way connection on the inert gas circuit, said three-way connection being situated upstream an inlet of the casing.

The recirculation loop allows to recirculate inert gas that already has circulated through the fuel cell casing, back into the casing. In the present invention, such recirculation is particularly beneficial during the warm up phase of the fuel sell : indeed the inert gas is not or very lightly contaminated with flammable gases such as hydrogen and/or oxidant such as oxygen given that the fuel cell is not yet operating. Such design of the inert gas circuit allows to waste much less inert gas in the warm up phase and thus to reach a higher efficiency of the system for a given amount of inert gas.

In some embodiments of a method of the invention, once recirculation of inert gas is activated on the recirculation loop during the warm up phase, no new inert gas is injected in the inert gas circuit. The inert gas loops in the recirculation loop during the whole warm-up phase without being exhausted. Thus a minimal amount of inert gas is used for warming up the fuel cell until the fuel-cell is at a sufficient temperature to be started up.

The three-way connection may be implemented by various devices. For example it may be a three-way valve, in particular a controlled three-way valve. Alternatively it may be a mixer interposed on the inert gas inlet conduct between the inert gas source and an inlet of the casing, the mixer being adapted to mix homogeneously pure inert gas from the pure inert gas source and recirculated inert gas from the recirculation loop.

The control means in data communication with sensing means (comprising for example the temperature sensor and other sensors) are configured to independently control the recirculation loop based on the concentration of oxygen and/or the concentration of hydrogen in the casing. For example the control means may be adapted to control debit from the recirculation loop to the three-way connection. The control means may also be adapted to control a gas circulator (or pump) placed on the recirculation loop.

The three-way connection is situated upstream the heat exchanger.

Gas recirculated in the recirculation loop may thus be warmed up by the heat exchanger. Indeed, inert gas that has circulated through the fuel cell casing has lost thermal energy by transferring it to the fuel-cell, such that it is colder in the recirculation loop than at its injection point at the inlet of the casing. It needs to be warmed up again to reach a sufficient temperature to warm the fuel-cell up.

The recirculation loop comprises:
- a pump interposed on the recirculation loop; and
- a recirculation valve adapted to regulate a flow of recirculated gas in the recirculation loop.

In some embodiments, the recirculation valve is located on the recirculation loop between the pump and the three-way connection.

The sensing means may also comprise at least one hydrogen concentration sensor and at least one oxygen concentration sensor.

The inerting system also comprises control means connected to the sensing means so that according to the data provided by the sensing means, regarding the oxygen and hydrogen concentrations, the control means control valves of the inert gas circuit. In particular the control means are adapted to control valves of the circuit depending on oxygen and/or hydrogen concentration conditions, to recirculate none, part or all of the inert gas of the casing. The oxygen and/or hydrogen concentrations are considered suitable for allowing the recirculation of part of the inert gas when they each are below a first pre-set concentration threshold. Therefore, the control means actuate on the valves and pumps of the recirculation loop to recirculate the inert gas only when the concentration of oxygen and/or the concentration of hydrogen of the fluid of the casing are below such first pre-set thresholds.

Depending on the hydrogen concentration and/or oxygen concentration, the inert gas recirculation system recirculates more or less mass flow of inert gas from the casing. If the concentration of hydrogen and the concentration of oxygen in the inert gas to be recirculated are below first pre-set thresholds, more mass flow of inert gas from the casing is recirculated and less pure inert gas is injected in the circuit from the inert gas source. On the contrary if the concentration of hydrogen or the concentration of oxygen in the inert gas present in the casing is above the first pre-set thresholds, a lower amount or no inert gas from the casing is recirculated and more pure inert gas is injected into the circuit.

These first pre-set thresholds are based on safety policies, so that if the concentration of oxygen and/or the concentration of hydrogen are sufficiently far away from the limits considered by the safety policy, the gas atmosphere inside the casing will be at least partially recirculated.

In addition, the control means are also configured to control an exhaust valve for regulating the exhaust of inert gas towards the atmosphere, based on the measured concentration of oxygen and hydrogen. In some embodiments, the control means are also configured to control an inlet valve for injecting pure inert gas from the inert gas source into the inert gas circuit.

The invention also extends to a hydrogen fuel-cell system comprising at least one fuel cell and at least one inerting system according to any of claims 1 to 8.

The invention also extends to an aircraft comprising at least one inerting system according to any of claims 1 to 8.

Methods of the invention may comprise, before starting the fuel-cell, heating up an inert gas and circulating the warm inert gas in the casing containing the fuel-cell.

In some embodiments of this method, warm inert gas is circulated in the casing before starting the fuel cell up. Once the fuel-cell is operating, the inert gas is circulated in the casing containing the fuel-cell to inert the casing without warming the inert gas up. Indeed, the oxidation of di-hydrogen happening in the fuel cell is exothermic, such that the temperature of the fuel-cell is self-maintained and does not need further heating to avoid the formation of water ice in the fuel-cell.

The method may comprise, before starting the fuel-cell, heating up an inert gas and circulating the warm inert gas in the casing containing the fuel-cell during a duration, called warm up duration, adapted for the fuel-cell to reach a temperature above a predetermined threshold, called start temperature threshold.

The start temperature threshold is a temperature determined to be safe to start up the fuel-cell without any risk of water ice formation in the fuel cell.

Said start temperature threshold is above zero degree Celsius ; it may for example be above 5 degrees Celsius, for example about 10 degrees Celsius.

In some embodiments a method according to the invention comprises a step of heating up an inert gas and circulating the warm inert gas in the casing containing the fuel-cell meanwhile the fuel-cell is operating.

As the chemical reaction in the fuel-cell is exothermic, there is no need to warm-up the fuel cell once the fuel cell is functioning. However, there may exist a significant thermal gradient between the warm fuel-cell and the inert gas. This would particularly be the case when the aircraft is at high altitude, where the inert gas may be much colder than the fuel-cell. As a consequence, the cold inert gas circulating around the fuel cell may provoke thermal gradient inside the fuel cell, which could impede the optimal functioning of the fuel cell. Thereby, warming up the inert gas reduces the temperature differences between the inert gas and the fuel cell and ensure that thermal gradients in the fuel cell do not exist or are minimized below acceptable levels.

The invention also extends to other possible combinations of features described in the above description and in the following description relative to the figures. In particular, the invention extends to methods for inerting a hydrogen fuel-cell comprising features described in relation to the inerting system and the invention extends to inerting systems comprising features described in relation to the method for inerting a hydrogen fuel-cell.

Moreover, as regards the inerting system in general and the recirculation loop in particular, the content of the European patent application with reference EP 23383984.5 is hereby incorporated to the description of the present invention. The content of European patent application EP 23382984.5 is hereby incorporated by reference to complete the description of the present patent application, in particular in relation to all aspects related to the recirculation loop ("fluid recirculation system" in the incorporated reference), including its sensors and control processes based on sensors' measurements. Indeed, as mentioned before in the present application, although the present invention has particular benefits before the fuel-cell is started, the present invention may be useful also in certain phases in which the fuel cell is functioning. In such phases the combination of the teachings of the present invention in which the inert gas is heated up before its introduction into the casing and of the teachings of the incorporated European patent application in which the inerting gas in the casing is recirculated in order to spare pure inert gas as long as certain concentrations of oxygen and hydrogen are respected, present particular synergetic benefits.

Some specific exemplary embodiments and aspects of the invention are described in the following description in reference to the accompanying figures.
Figure 1 is a schematic representation of a first embodiment of an inerting system according to the invention,
Figure 2 is a schematic representation of a second embodiment of an inerting system according to the invention,
Figure 3 is a schematic representation of an embodiment of a method for inerting a hydrogen fuel-cell according to the invention.

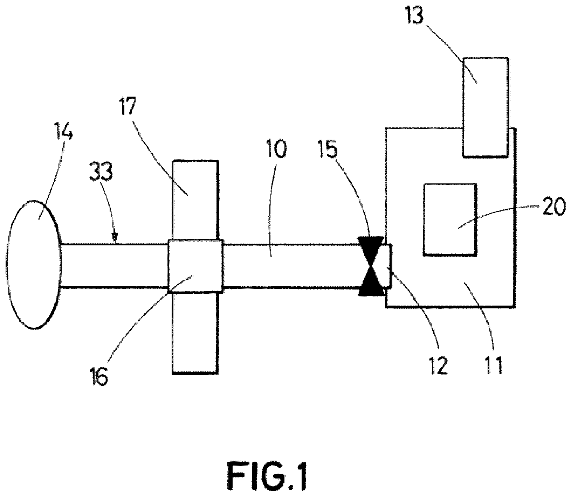

In Figure 1 a specific embodiment of an inerting system for an aircraft according to the invention is shown. It comprises a casing 11 adapted to house a hydrogen fuel-cell 20. The casing comprises an inlet 12 to inject a gas in the casing and an outlet 13 to exhaust gases from the casing. An exhaust conduct 28 connects the outlet 13 of the casing to an exhaust to the atmosphere such that gas in the casing may be exhausted outside the aircraft.

It also comprises an inert gas source 14, for example a pressurized bottle of nitrogen.

An inert gas inlet conduct 10 connects the inert gas source 14 to the inlet 12 of the casing. The inlet conduct 10 may comprise an inlet valve 15 adapted to regulate a flow of inert gas from the inert gas source 14 to the casing 11.

Together, the inlet conduct 10, the casing 11 and the exhaust conduct 28 form an inert gas circuit for circulating inert gas around one (or a plurality of) fuel-cell 20 so as to inert the atmosphere directly around the fuel-cell as well as to flush any inflammable gas such as oxygen and or hydrogen outside of the aircraft.

According to the invention, the inerting system also comprises a heat exchanger 16 adapted to heat up inert gas passing through said heat exchanger 16. The heat exchanger is located upstream the casing on the inert gas circuit such that the inert gas passing through the casing 11 has been previously warmed up by the heat exchanger 16. Thereby the inert gas can transfer part of its heat to the fuel cell 20 and its components. The heat exchanger 16 is connected by a conduct 17 to a heat source (not represented). The heat source may be of various types, as already mentioned.

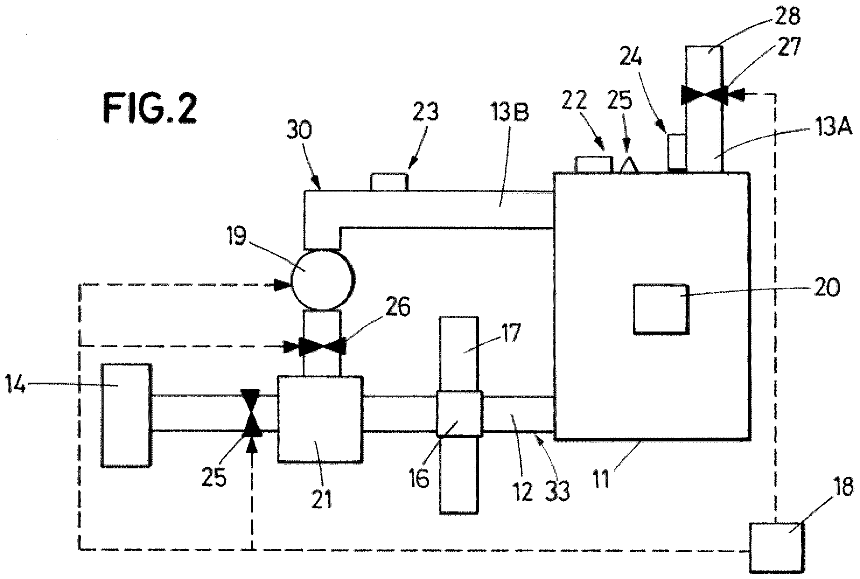

Figure 2 shows a different specific embodiment of an inerting system for an aircraft according to the invention.

In this embodiment, the inerting system also comprises also comprises an inert gas circuit comprising a casing 11 for a fuel-cell 20, an inert gas inlet conduct 10 with an inlet valve 15, an inert gas source 14, an exhaust conduct 28 connected to an outlet 13A of the casing 11, and a heat exchanger 16.

In this embodiment however the inerting system comprises more elements. The inerting system comprises a temperature sensor 25 adapted to measure a temperature in the casing 11. The temperature sensor 25 provides temperature data to a control means 18 in data communication with the temperature sensor 25. The control means is adapted to control the power delivered by the heat exchanger 16 to the inert gas, based on the temperature data provided by the temperature sensor 25. The temperature in the casing may thus be monitored an the power and duration of heating provided by the warm inert gas may be adapted. Also, temperature information may be provided directly by the temperature sensor or by the control means 18 to a fuel-cell controller such that this latter may start the fuel-cell once an acceptable temperature has been reached in the casing 11. Similarly the heating exchanger may be activated when the temperature difference between the functioning fuel-cell and the casing is above a predetermined threshold.

The inert gas circuit further comprises a recirculation loop 30. The recirculation loop is a circuit connecting a second outlet 13B of the casing to the inlet conduct 10 so as to recirculate at least part of the gas contained in the casing 11 in a loop back to the casing.

The recirculation loop 30 comprises a pump 19 adapted to pump gas from the casing back into the inlet conduct 10. The recirculation loop 30 also comprises a recirculation valve 26 adapted to regulate a flow of gas in the recirculation loop 30.

In this embodiment, the inerting system comprises a three-way connection 21 between a first portion of the inlet conduct 10 connected to the source of inert gas 14, a second portion of the inlet conduct 10 connected to the inlet 12 of the casing, and the recirculation loop.

The three-way connection may be a mixer adapted to mix pure inert gas from the pure inert gas source and recirculated gas from the recirculation loop.

In this embodiment, the heat exchanger 16 is situated between the three-way connection 21 and the inlet 12 of the casing such that the recirculated inert gas is also warmed up before its re-introduction in the casing. Inert gas may thus be spared as long as the fuel-cell is not started given that the leak rate of a fuel-cell that is not working is very low. Thus all or nearly all of the inert gas may circulate in the recirculation loop to warm up the fuel cell without need to add pure inert gas from the inert gas source.

Nonetheless, in other embodiments, the heat exchanger may also be placed upstream the three-way connection and/or upstream the inlet valve 15.

The control means 18 are adapted to further control the inlet valve, the recirculation valve and an exhaust valve situated on the exhaust conduct 28, as well as the pump 19. In particular the control means are adapted to control one or all of these elements based on data received from oxygen and/or hydrogen concentration sensors 22, 23, 24 situated respectively in the casing 11, on the recirculation loop and on the exhaust conduct 28.

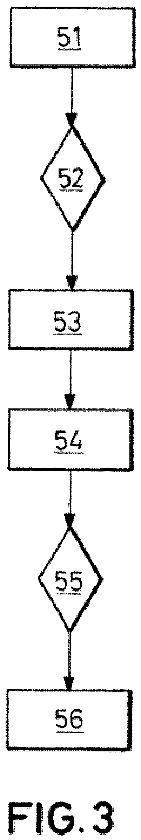

Figure 3 shows steps of a method for inerting a hydrogen fuel-cell according to the invention.

In a first step 51 a request is given to start a fuel-cell.

In a second step 52, a determination is made as whether to warm the fuel-cell up before starting it or not. A temperature indication is compared to a predetermined start temperature threshold. The temperature indication may be outside temperature or a temperature measured in the casing.

If the temperature indication is above a start temperature threshold, the fuel cell may be started without pre-heating. If the temperature indication is below the start temperature threshold, the pre-heating is activated and the process goes to step 53.

In a third step 53, the heat exchanger is activated and warm inert gas is injected in the casing so as to warm up the fuel-cell contained within said casing. Step 53 may be, as mentioned before, defined by a predetermined duration based for example on the temperature indication. For example, this step may comprise heating N2 at 40°C during at least 1 minute and until a temperature oof at least 10ºC is attained in the casing.

After step 53, either because the temperature measured in the casing is above a predetermined threshold or either because the duration of step 53 has come to an end, the process carries on with step 54.

In step 54 the fuel cell is started.

From then on, the process may comprise a step 55 whereby the temperature of the casing or of the inert gas injected in the casing is monitored. If the temperature difference between the inert gas surrounding the fuel-cell in the casing and the fuel-cell itself is above a predetermined threshold, the process may go to an additional step 56. The temperature threshold in step 55 may be the same as or may be different from the temperature threshold considered for step 52.

Step 56 represents a phase in which the fuel-cell is working and thus heats itself due to the exothermic reaction happening within, but the heat exchanger of the inerting system is activated to heat up the inert gas in order to avoid a too important temperature difference between the fuel-cell and its surrounding inert gas.

The invention is not limited to the specific embodiments herein disclosed as examples. The invention also encompasses other embodiments not herein explicitly described, which may comprise various combinations of the features herein described.

## Claims

1. An inerting system comprising:
- a casing (11) adapted to house at least one hydrogen fuel cell,
- a source of inert gas (14),
- an inert gas circuit (33) adapted to conduct inert gas, said inert gas circuit (33) being connected to the casing (11) such that the casing (11) is part of the inert gas circuit,
**characterized in that** it comprises a heat exchanger (16) adapted to heat up inert gas passing through said heat exchanger (16), the heat exchanger (16) being located upstream the casing (11) on the inert gas circuit.

2. Inerting system according to claim 1, further **characterized in that** the inert gas circuit (33) further comprises an exhaust portion (28) to exhaust inert gas to the atmosphere, said exhaust portion of the inert gas circuit being situated downstream the casing.

3. Inerting system according to any of claim 1 or 2, further **characterized in that** the fuel-cell casing comprises sensing means comprising at least one temperature sensor (25) adapted to measure the temperature inside the fuel-cell casing.

4. Inerting system according to claim 3, further **characterized in that** it comprises control means (18) in data communication with the temperature sensor (25) and adapted to control a power delivered by the heat exchanger (16) to inert gas passing through said heat exchanger (16) based on the temperature data provided by the temperature sensor.

5. Inerting system according to any of claim 1 to 4, further **characterized in that** the inert gas circuit (33) comprises a recirculation loop (30) between an exhaust (13B) of the casing (11) and a three-way connection (21) on the inert gas circuit, said three-way connection (21) being situated upstream an inlet (12) of the casing (11).

6. Inerting system according to claim 5, further **characterized in that** the three-way connection (21) is situated upstream the heat exchanger (16).

7. Inerting system according to any of claim 5 to 6, further **characterized in that** the recirculation loop (30) comprises:
- a pump (19) interposed on the recirculation loop; and
- a recirculation valve (26) adapted to regulate a flow of recirculated gas in the recirculation loop (30).

8. Inerting system according to claim 3 and any of claim 5 to 7, further **characterized in that** the sensing means also comprise at least one hydrogen concentration sensor (23) and at least one oxygen concentration sensor.

9. A hydrogen fuel-cell system comprising at least one fuel cell and at least one inerting system according to any of claims 1 to 8.

10. Method for inerting a hydrogen fuel-cell comprising:
- circulating an inert gas in a casing (11) containing the fuel-cell,
**characterized in that** it comprises a step (53) of:
- heating up the inert gas before circulating the inert gas in the casing containing the fuel-cell.

11. Method according to claim 10, further **characterized in that** it comprises:
- before starting the fuel-cell, heating up the inert gas and circulating the warm inert gas in the casing containing the fuel-cell.

12. Method according to claim 11 comprising, before starting the fuel-cell, heating up an inert gas and circulating the warm inert gas in the casing containing the fuel-cell during a duration, called warm up duration, adapted for the fuel-cell to reach a temperature above a predetermined threshold, called start temperature threshold.

13. Method according to claim 12, further **characterized in that** said start temperature threshold is above zero degree Celsius, in particular said start temperature threshold is of at least 5 degrees Celsius.

14. Method according to any of claims 10 to 13, further comprising heating up an inert gas and circulating the warm inert gas in the casing containing the fuel-cell meanwhile the fuel-cell is operating.
